Europäisches Patentamt

European Patent Office

Office européen des brevets

(19)

(11) **EP 1 103 915 B1**

(12) **FASCICULE DE BREVET EUROPEEN**

(45) Date de publication et mention
de la délivrance du brevet:
**16.06.2004 Bulletin 2004/25**

(51) Int Cl.7: **G06K 19/07**

(21) Numéro de dépôt: **00403187.8**

(22) Date de dépôt: **16.11.2000**

(54) **Dispositif d'alimentation stabilisée de composants électroniques télé-alimentés**

Stabilisierte Speisungsschaltung für ferngespeiste elektronische Vorrichtungen

Regulated power suppy for remotly powered electronic devices

(84) Etats contractants désignés:
**DE GB IT NL**

(30) Priorité: **26.11.1999 FR 9914887**

(43) Date de publication de la demande:
**30.05.2001 Bulletin 2001/22**

(73) Titulaire: **FRANCE TELECOM**
**75015 Paris (FR)**

(72) Inventeur: **Bouvier, Jacky**
**38240 Meylan (FR)**

(74) Mandataire: **Dossmann, Gérard**
**Bureau D.A. Casalonga-Josse**
**Paul-Heyse-Strasse 33**
**80336 München (DE)**

(56) Documents cités:
**FR-A- 2 774 492        FR-A- 2 776 410**
**GB-A- 2 321 726**

## Description

La présente invention concerne l'alimentation de composants électroniques télé-alimentés, et notamment mais non exclusivement les cartes à puce sans contact, c'est à dire dialoguant à distance avec un terminal, et pour lesquelles la transmission des données de la carte vers le terminal s'effectue de façon classique par une modulation par absorption. Une application particulière de l'invention concerne les cartes à puce sans contact dite de "forte proximité" ("close coupling" en langue anglaise) qui peuvent également s'introduire dans un lecteur.

Ces cartes à puce sans contact sont également alimentées via le même canal que celui utilisé pour la transmission des données. En pratique la puce comporte une interface inductive telle qu'une bobine, coopérant avec une bobine du terminal distant. Le décodage des données transmises depuis la carte par modulation par absorption, consiste à mesurer au niveau de la bobine du terminal les variations de tension correspondant aux données transmises et générées par les moyens de modulation de la puce. Une telle carte à puce est décrite dans le document GB-A-2 321 726.

Actuellement, le nombre de fonctions intégrées sur une même puce électronique est en constante évolution. La multiplication de fonctions implique une multiplication de transistors utilisés ainsi qu'une augmentation importante de la quantité d'énergie consommée. Il en résulte alors lors du fonctionnement des composants électroniques de la puce, des variations importantes de courant consommé ou absorbé. Et ces variations de courant consommé induisent des courants dans la bobine de la puce qui se mélangent avec le courant de modulation proprement dit. Les variations de tension obtenues au niveau de la bobine du terminal comprennent alors non seulement les variations de tension générées par la modulation par absorption mais aussi ces variations de tension "parasites" provoquées par les variations de consommation des composants éléctroniques de la puce. Le décodage des informations transmises s'en trouve alors perturbé, et la transmission des données peut même dans le pire des cas être interrompue.

L'invention vise à apprter une solution à ce problème.

Un but de l'invention est d'empêcher que les variations de courant absorbé par les composants électroniques de la puce ne perturbe la transmission des données, et d'obtenir une transmission de données fiable quelles que soient les variations du courant consommé par les circuits intégrés télé-alimentés.

L'invention propose donc un dispositif d'alimentation stabilisée d'un ensemble de composants électroniques télé-alimentés pour lequel l'alimentation et la transmission de données se font sur un même canal par l'intermédiaire d'une interface inductive, telle qu'une bobine. Selon l'invention, le dispositif comprend un module électronique qui, interposé entre l'interface inductive et l'ensemble de composants électroniques, alimente ledit ensemble de composants électroniques avec un courant variable, c'est à dire susceptible de varier en fonction des variations de consommation des composants éléctroniques, de façon à satisfaire le bon fonctionnement de ces composants électroniques, et consomme un courant constant, de façon à permettre une transmission de données efficace, le module électronique comprenant un générateur de courant délivrant un courant constant et un moyen de dérivation (ou shunt) à tension constante (par exemple un transistor N-MOS polarisé par un pont de résistances) connecté en parallèle avec ledit ensemble de composants électroniques.

Avantageusement, le courant constant délivré par le générateur de courant est au moins égal au maximum du courant consommé par l'ensemble des composants électroniques.

Selon une caractéristique avantageuse de l'invention, le générateur de courant constant est commandé par un circuit de référence au moyen d'une tension constante.

De préférence, le module électronique comprend deux capacités de filtrage afin d'éliminer les signaux hautes fréquences. Selon une caractéristique avantageuse de l'invention, ladite interface comprend une bobine reliée à un redresseur double alternance, ladite bobine étant le siège d'une tension induite par le champ magnétique d'un inducteur distant ( par exemple la bobine du terminal dialoguant avec la carte à puce).

D'autres avantages et caractéristiques de l'invention apparaîtront à l'examen de la description détaillée d'un mode de réalisation nullement limitatif, et des dessins annexés, sur lesquels :

- figure 1 est un schéma électronique simplifié d'un dispositif selon l'invention,
- la figure 2 est une représentation schématique d'un moyen de référence de tension du dispositif de la figure 1,
- la figure 3 est une représentation schématique d'un générateur de courant du dispositif de la figure 1,
- la figure 4 est une représentation schématique d'un moyen de dérivation à tension constante du dispositif de la figure 1, et
- la figure 5 est une représentation schématique des moyens de modulation du dispositif de la figure 1.

Bien que l'invention n'y soit pas limitée, on va maintenant décrire un dispositif selon l'invention réalisé sur une carte à puce comportant comme composant électronique principal un micro-contrôleur à logique asynchrone. En effet, un micro-contrôleur à logique asynchrone présente comme caractéristique des grandes variations de puissance absorbée.

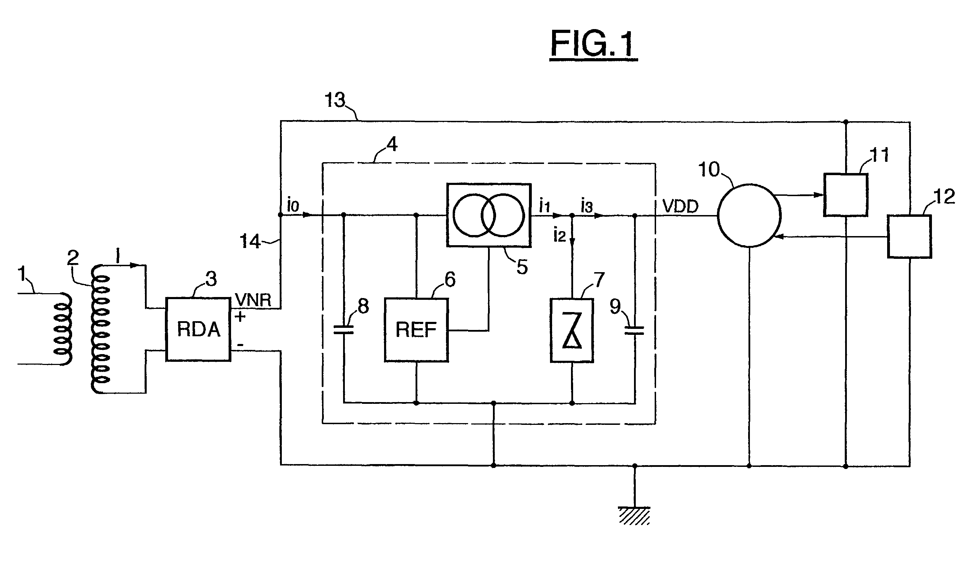

En se référant à la figure 1, la bobine 1 est un inducteur présent dans un terminal distant. La bobine 1 crée un champ magnétique. Les autres éléments illustrés sur la figure 1 font partie de la puce. La bobine 2 alimente les éléments de la puce par la tension induite qui naît lorsque la bobine 2 est dans le champ magnétique créé par la bobine 1. Cette tension induite fournit le courant I consommé par la puce. Un redresseur double alternance RDA fournit une tension VNR à partir de la tension alternative radio fréquence présente aux bornes de la bobine 2.

La tension induite aux bornes de l'inducteur 1 est de la forme:

$$V = M\omega I.$$

où M est l'inductance mutuelle entre la bobine 2 et l'inducteur 1 et, $\omega = 2\pi F$ (F la fréquence) est la pulsation.

La tension $V = M\omega I$ correspond à la tension présente lorsqu'aucune donnée n'est transmise de la carte vers le terminal.

L'interface inductive comportant la bobine 2 et le redresseur double alternance 3 permet non seulement d'alimenter la puce et mais également de transmettre des données de la carte vers le terminal et du terminal vers la carte.

Le micro-contrôleur 10 est le circuit électronique principal de la carte à puce. Le micro-contrôleur 10 peut échanger des données avec le terminal à l'aide de moyens de modulation 11 de données et de moyens de démodulation 12 de données. Les moyens de démodulation 12 permettent de recevoir des données émises par le terminal. La transmission de données du terminal vers la puce s'effectue par modulation d'amplitude du champ magnétique. Les moyens de modulation 11 de données permettent de transmettre des données vers le terminal par la technique de modulation par absorption d'une sous porteuse modulée en phase, technique connue de l'homme du métier.

Un module électronique 4 est disposé entre le micro-contrôleur 10 et le redresseur double alternance 3. Le module électronique 4 admet à son entrée un courant constant i0 et alimente le micro-contrôleur 10 avec un courant i3 qui varie en fonction de la consommation dudit micro-contrôleur 10.

Le module électronique 4 comprend un générateur de courant 5 imposant un courant constant i1 sur sa branche, un moyen de dérivation 7 à tension constante (par exemple un transistor N-MOS polarisé sur sa grille par un pont de résistances) et un moyen de référence 6 fournissant des courants de référence pour la polarisation du générateur de courant. Le module électronique 4 comprend également deux capacités de filtrage 8 et 9 empêchant que des signaux hautes fréquences viennent perturber le fonctionnement dudit module électronique 4.

Le moyen de dérivation impose aux bornes du micro-contrôleur 10 une tension VDD stabilisée et égale à la valeur requise pour le bon fonctionnement dudit micro-contrôleur 10.

La tension VNR alimente les moyens de démodulation, les moyens de modulation ainsi que le moyen de référence 6. Une des sorties du moyen de référence 6 fournit des courants de référence pour la polarisation du générateur de courant 5.

Le générateur de courant 5 délivre un courant constant i1 qui est déterminé de façon à être égal au maximum du courant pouvant être absorbé par le micro-contrôleur 10. Pour satisfaire aux fluctuations de courant absorbé par le micro-contrôleur 10, le courant constant i1 est divisé en deux : une partie i3 alimentant le micro-contrôleur 10 et une partie i2 alimentant le moyen de dérivation 7. Les courant i2 et i3 varient en sens inverse. Lorsque i2 augmente, i3 diminue. Lorsque i2 diminue, i3 augmente. Ainsi les variations du courant absorbé par le micro-contrôleur ne se répercute pas au niveau de i1 et donc de i0 qui reste constant.

$$i1 = i2 + i3 = constant$$

En d'autres termes, les variations de courant du microcontrôleur ne sont pas transmises au niveau de la tension VNR, ne perturbant pas les moyens de modulation et de démodulation.

Lorsque le micro-contrôleur désire transmettre des données vers le terminal, ces données sont transmises vers le modulateur 11, ce dernier transmet à son tour les données vers le redresseur double alternance 3 sous forme d'une variation de courant $\delta i$ à travers les branches 13 et 14 situées entre le modulateur 11 et la borne positive du redresseur double alternance 3. La variation $\delta i$ est ensuite transmise sur la bobine 2, et la tension induite aux bornes de l'inducteur 1 devient égale à :

$$V = M\omega(I + \delta i)$$

Puisque le terme $M\omega I$ est un terme quasiment constant, ne contenant aucune information de données, il se traduit par une valeur quasi-fixe. On peut donc détecter dans le terminal la modulation correspondant aux données transmises et générée par le terme $\delta i$. Puisque le courant i0 est constant et n'est pas source de variations pouvant être causées par le fonctionnement du micro-contrôleur 10, la transmission des données de la carte vers le terminal n'est pas perturbée.

Bien que la transmission dans le sens du terminal vers la carte à puce soit moins problématique car la transmission s'effectue par modulation d'amplitude d'une porteuse de 13 mégaHertz modulée à 10%, le module 4 selon l'invention agit favorablement de la même façon en isolant la puissance absorbée par le micro-contrôleur, de la transmission des données.Ainsi quel que soit le sens de transmission, le micro-contrôleur peut continuer l'exécution de son programme simultanément à la transmission des données.

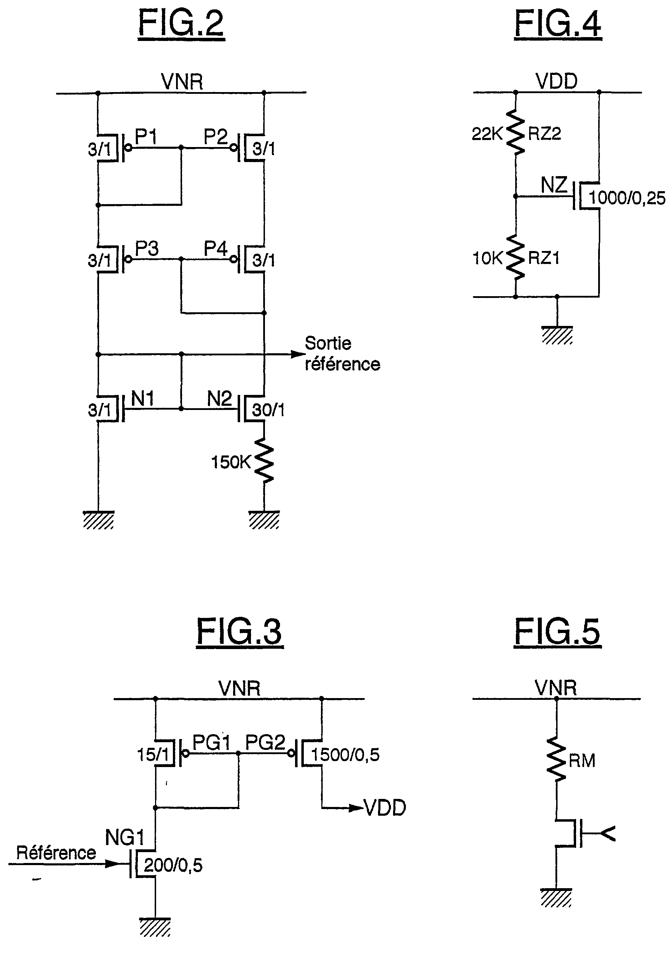

Sur les figures 2 à 5, sont indiquées les geométries des transistors en technologie 0,25 micron.

Sur la figure 2, on voit en détail le moyen de référence 6. Ce moyen est connu de l'homme du métier et comprend principalement six transistors, quatre transistors P-MOS (P1, P2, P3 et P4) identiques ayant une longueur égale à un micron et une largeur égale à trois micron, et deux transistors N-MOS, N1 et N2 dont les grilles sont connectées entre elles. La longueur du transistor N1 est égale à un micron, et sa largeur est égale à trois microns. La longueur du transistor N2 est égale à un micron, et sa largeur est égale à trente microns. Le moyen de référence de tension comporte également une résistance de 150 kΩ disposé entre le transistor N2 et la masse.

La sortie du moyen de référence 6 s'effectue sur la grille de N1 et de N2 connectée au drain de N1. La tension de sortie est constante et est déterminée selon les dimensions des composants (transistors et résistance) utilisés.

Sur la figure 3, on voit en détail le générateur de courant constant 5 piloté par les courants de référence sortant du moyen de référence 6. Le générateur de courant est un dispositif comprenant deux transistors P-MOS (PG1 et PG2) reliés entre eux par leur grille et un transistor N-MOS NG1 dont le drain est relié à la grille et au drain de PG1. La longueur du transistor PG1 est égale à un micron, et sa largeur est égale à 15 microns. La longueur du transistor PG2 est égale à 0,5 micron, et sa largeur est égale à 1500 microns. La tension de sortie du moyen de référence 6 alimente la grille de NG1. La sortie du générateur de courant 5 s'effectue par le drain de PG2.

Sur la figure 4 on voit le moyen de dérivation 7 composé d'un transistor N-MOS (NZ) polarisé par un pont de résistances RZ1 et RZ2 sur la grille du N-MOS. La valeur de la tension stabilisée dépend de la tension de seuil dudit transistor N-MOS et de la valeur du rapport RZ2/RZ1 des résistances RZ2 et RZ1. RZ1 est égale à 22kΩ, RZ2 est égale à 10KΩ et le rapport largeur/longueur du transistor NZ est égal à 1000/0,25.

Sur la figure 5, on voit des moyens de modulation permettant l'envoi de données vers le terminal par la technique de modulation par absorption d'une sous porteuse modulée en phase. Les moyens de modulation comprennent un transistor N-MOS et une résistance RM. La sous porteuse modulée en phase (les données venant du micro-contrôleur 10) pilote la grille du transistor N-MOS et crée ainsi la variation δi du courant dans la résistance RM connectée à la tension VNR.

Avec les caractéristiques du moyen de référence de tension 6, du générateur de courant 5, du moyen de dérivation 7 indiquées ci-dessus, le courant fourni par le générateur de courant 5 est de 14 mA, la tension stabilisée alimentant le micro-contrôleur 10 est de 2 Volts.

**Revendications**

1. Dispositif d'alimentation stabilisée d'un ensemble de composants électroniques (10) télé-alimentés pour lequel l'alimentation et la transmission de données se font sur un même canal par l'intermédiaire d'une interface inductive (2, 3) comprenant un module électronique (4) qui, interposé entre l'interface inductive (2, 3) et l'ensemble de composants électroniques (10), alimente ledit ensemble de composants électroniques avec un courant variable (i3) **caractérisé en ce que** ledit module électronique consomme un courant constant (i0) et comprend un générateur de courant (5) délivrant un courant constant (i1) et un moyen de dérivation à tension constante (7) connecté en parallèle avec l'ensemble de composants électroniques (10).

2. Dispositif selon la revendication précédente, **caractérisé par le fait que** le courant constant (i1) délivré par le générateur de courant (5) est au moins égal au maximum du courant consommé (i3) par l'ensemble des composants électroniques (10).

3. Dispositif selon la revendication 2, **caractérisé par le fait que** le moyen de dérivation à tension constante (7) est un transistor N-MOS (NZ) polarisé par un pont de résistances (RZ1, RZ2).

4. Dispositif selon l'une des revendications 2 à 3, **caractérisé par le fait que** le générateur de courant (5) est commandé par un circuit de référence (6) au moyen d'une tension constante.

5. Dispositif selon l'une quelconque des revendications précédentes, **caractérisé par le fait que** le module électronique (4) comprend deux capacités de filtrage (8, 9).

6. Dispositif selon l'une quelconque des revendications précédentes, **caractérisé par le fait que** ladite interface inductive comprend une bobine (2) reliée à un redresseur double alternance (3).

**Patentansprüche**

1. Vorrichtung zur stabilisierten Versorgung einer ferngespeisten elektronische Schaltung (10), deren Versorgung und Datenübertragung durch denselben Kanal mittels einer induktiven Schnittstelle (2, 3) realisiert ist, wobei die Vorrichtung ein elektronisches Modul (4) umfaßt, das zwischen der induktiven Schnittstelle (2, 3) und der elektronischen Schaltung (10) angeordnet ist und das die elektronische Schaltung (10) mit einem Wechselstrom (i3) versorgt,
**dadurch gekennzeichnet,**

**daß** das elektronische Modul (4) einen Konstantstom (i0) aufnimmt und eine Stromquelle (5), die einen Konstantstrom (i1) bereitstellt und ein Mittel zur Abzweigung einer Konstantspannung (7) umfaßt, das zur elektronischen Schaltung (10) parallel geschaltet ist.

2. Vorrichtung nach dem voranstehenden Anspruch, **dadurch gekennzeichnet, daß** der von der Stromquelle (5) bereitgestellte Konstantstrom (i1) mindestens gleich dem maximalen, von der elektronischen Schaltung (10) aufgenommenen Strom (i3) ist.

3. Vorrichtung nach Anspruch 2, **dadurch gekennzeichnet, daß** das Mittel zur Abzweigung einer Konstantspannung (7) ein N-MOS Transistor (NZ) ist, der durch eine Widerstandsbrücke (RZ1, RZ2) polarisiert wird.

4. Vorrichtung nach einem der Ansprüche 2 oder 3, **dadurch gekennzeichnet, daß** die Stromquelle (5) durch eine Referenzschaltung (6) mit Hilfe einer Konstantspannung gesteuert wird.

5. Vorrichtung nach einem der voranstehenden Ansprüche, **dadurch gekennzeichnet, daß** das elektronische Modul (4) zwei Filter-Kapazitäten (8, 9) umfaßt.

6. Vorrichtung nach einem der voranstehenden Ansprüche, **dadurch gekennzeichnet, daß** die induktive Schnittstelle (2, 3) eine Spule (2) umfaßt, die mit einem Zweiweggleichrichter (3) verbunden ist.

## Claims

1. Stabilized power supply device for an assembly of remotely powered electronic components (10), for which the supply and the data transmission take place on the same channel via an inductive interface (2, 3), comprising an electronic module (4) which, interposed between the inductive interface (2, 3) and the assembly of electronic components (10), supplies the said assembly of electronic components with a variable current (i3), **characterized in that** the said electronic module consumes a constant current (10) and comprises a current generator (5) delivering a constant current (i1) and a constant-voltage shunt (7) connected in parallel with the assembly of electronic components (10).

2. Device according to the preceding claim, **characterized in that** the constant current (i1) delivered by the current generator (5) is at least equal to a maximum current (i3) consumed by the assembly of electronic components (10).

3. Device according to Claim 2, **characterized in that** the constant-voltage shunt (7) is an n-MOS transistor (NZ) biased by a resistance bridge (RZ1, RZ2).

4. Device according to one of Claims 2 to 3, **characterized in that** the current generator (5) is controlled by a reference circuit (6) by means of a constant voltage.

5. Device according to any one of the preceding claims, **characterized in that** the electronic module (4) comprises two filtering capacitors (8, 9).

6. Device according to any one of the preceding claims, **characterized in that** the said inductive interface comprises a coil (2) connected to a full-wave rectifier (3).

**FIG.1**

# FIG.2

Sortie
référence

# FIG.4

# FIG.3

# FIG.5